# DEMANDE DE BREVET EUROPEEN

(11) **EP 4 458 142 A1**
(43) Date de publication de la demande: **06.11.2024**
(21) Numéro de dépôt: 24174164.4
(22) Date de dépôt: 03.05.2024
(51) Int. Cl.: A01K 7/00, A01K 7/02

(54) **ABREUVOIR POUR ANIMAUX**

(30) Priorité: 05.05.2023 FR 2304532
(71) Demandeur: La Buvette, 08090 Tournes (FR)
(72) Inventeur: BOUSQUET, Jean-Philippe, 51480 BELVAL-SOUS-CHATILLON (FR)
(74) Mandataire: Cabinet Bleger-Rhein-Poupon

(57) **Abrégé**

Abreuvoir (1) pour animaux comportant, d'une part, un bac (2), qui présente un volume interne (7) pour contenir de l'eau ainsi qu'une partie supérieure (5) pourvue d'une ouverture (6), d'autre part, un couvercle (9), surmontant le bac (2), refermant l'ouverture (6), et comportant, d'une part, un châssis (11), positionné par-dessus le bac (2), et présentant une ouverture traversante (12) pour permettre un accès au volume interne (7) et, d'autre part, des moyens d'obturation escamotables (13), configurés pour obturer l'ouverture traversante (12), et mobiles entre une position de fermeture et d'ouverture de l'ouverture traversante (12). Cet abreuvoir (1) est caractérisé par le fait que les moyens d'obturation escamotables (13) comportent, d'une part, une trappe escamotable (14) pour obturer l'ouverture traversante (12), ceci en position de fermeture de l'ouverture traversante (12) et, d'autre part, un flotteur (15), positionné à l'intérieur du volume interne (7), et configuré pour être au moins en partie immergé dans l'eau contenue dans le volume interne (7) ainsi que pour repousser la trappe escamotable (14) en position de fermeture de l'ouverture traversante (12), ceci sous l'effet de la poussée de l'eau et, d'autre part encore, des moyens d'entretoise (16) pour relier la trappe escamotable (14) et le flotteur (15) ainsi que pour espacer cette trappe escamotable (14) et ce flotteur (15).

## Description

L'invention concerne un abreuvoir pour animaux.

La présente invention a trait au domaine de la fabrication du matériel pour l'élevage d'animaux, notamment des bovins.

Cette invention concerne, plus particulièrement, le domaine de la fabrication du matériel pour l'abreuvement de tels animaux, en particulier le domaine de la fabrication d'abreuvoirs.

Par le document FR3121327, on connait un abreuvoir pour animaux qui comporte un bac qui présente, d'une part, un volume interne qui est configuré pour contenir de l'eau et, d'autre part, une partie supérieure pourvue d'une ouverture. Un tel abreuvoir comporte, également, un couvercle, qui surmonte le bac, qui referme l'ouverture de ce bac, et qui comporte, d'une part, un châssis, qui est positionné par- dessus le bac, et qui présente une ouverture traversante qui est configurée pour permettre un accès au volume interne du bac et, d'autre part, des moyens d'obturation escamotables, qui sont configurés pour obturer l'ouverture traversante du châssis, et qui sont mobiles entre une position de fermeture et une position d'ouverture de l'ouverture traversante du châssis. De tels moyens d'obturation escamotables adoptent la forme d'une boule qui est configurée pour flotter sur l'eau contenue dans le bac ainsi que pour refermer l'ouverture traversante sous l'effet de la poussée de l'eau. Les animaux, qui viennent s'abreuver dans un tel abreuvoir, exercent avec leur mufle une pression sur la boule qui s'enfonce dans l'eau, ce qui permet à l'animal d'avoir accès à l'eau contenue dans l'abreuvoir et de s'abreuver.

A ce propos, on observera que, en raison de la sélection des animaux au cours des dernières années, la taille du mufle de ces animaux (plus particulièrement des bovins de race à viande) a sensiblement augmenté de sorte que la taille de l'ouverture traversante du châssis des abreuvoirs traditionnels n'est plus adaptée à la morphologie de ces animaux qui ne peuvent donc plus accéder à l'eau et s'abreuver.

Une solution consiste à augmenter la taille de l'ouverture traversante du châssis ce qui nécessite, alors, également, d'augmenter la taille de la boule des moyens d'obturation escamotables. Une telle augmentation de la taille de cette boule a pour effet d'accroître la force nécessaire pour repousser cette boule à l'intérieur du bac afin de pouvoir accéder à l'eau. Face à un tel accroissement, les animaux éprouvent de réelles difficultés à repousser la boule à l'intérieur du bac et, ainsi, à s'abreuver.

Par le document US5036800, on connait un abreuvoir pour animaux, notamment pour bovins, comportant, d'une part, un bac, qui présente un volume interne configuré pour contenir de l'eau ainsi qu'une partie supérieure pourvue d'une ouverture, d'autre part, un châssis, qui est positionné par-dessus le bac, et qui présente une ouverture traversante qui est configurée pour permettre un accès au volume interne du bac et, d'autre part encore, des moyens d'obturation escamotables, qui sont configurés pour obturer l'ouverture traversante du châssis, et qui sont mobiles entre une position de fermeture et une position d'ouverture de l'ouverture traversante du châssis. Ces moyens d'obturation escamotables comportent, d'une part, une trappe escamotable qui est configurée pour obturer l'ouverture traversante du châssis, ceci en position de fermeture de l'ouverture traversante du châssis, d'autre part, un flotteur, qui est positionné à l'intérieur du volume interne du bac, et qui est configuré pour être au moins en partie immergé dans l'eau contenue dans le volume interne du bac ainsi que pour repousser la trappe escamotable en position de fermeture de l'ouverture traversante du châssis, ceci sous l'effet de la poussée de l'eau et, d'autre part encore, des moyens d'entretoise qui sont configurés pour relier la trappe escamotable et le flotteur ainsi que pour espacer cette trappe escamotable et ce flotteur. On observera que cet abreuvoir comporte, encore, des moyens de montage en déplacement, qui sont configurés pour monter les moyens d'obturation escamotables en déplacement par rapport au châssis, ceci entre la position de fermeture et la position d'ouverture de l'ouverture traversante du châssis. Ces moyens de montage en déplacement comportent des moyens de montage en translation axiale des moyens d'obturation escamotables, ceci selon une direction sensiblement perpendiculaire à la surface de l'eau et à la surface inférieure de la trappe escamotable.

Lorsqu'un animal souhaite s'abreuver dans un tel abreuvoir, cet animal doit repousser les moyens d'obturation escamotables à l'intérieur du bac avec son mufle, ceci pour permettre à l'eau, qui est située sous la trappe escamotable, de passer par-dessus la trappe escamotable afin d'être accessible pour l'animal. Pour repousser les moyens d'obturation escamotables à l'intérieur du bac, l'animal doit exercer, avec son mufle et sur la trappe escamotable, une force qui doit, d'une part, s'opposer à l'action de l'eau sur le flotteur qui a tendance à entraîner la trappe escamotable en direction de la position de fermeture de l'ouverture traversante et, d'autre part, s'opposer à l'action de l'eau sur la surface inférieure de la trappe escamotable qui a tendance à empêcher l'immersion de cette trappe escamotable sous la surface de l'eau. A ce propos, on observera que, compte tenu de la structure des moyens de montage en déplacement des moyens d'obturation escamotables, c'est l'intégralité de la surface de l'eau qui exerce une action sur l'intégralité de la surface inférieure de la trappe escamotable de sorte que, pour s'opposer à l'action de l'eau sur la trappe escamotable, l'animal doit exercer sur cette trappe escamotable une force qui est très importante, qui est supérieure à la force nécessaire pour s'opposer à l'action de l'eau sur le flotteur, et qui vient s'ajouter à cette force nécessaire pour s'opposer à l'action de l'eau sur le flotteur. Il en résulte que l'animal éprouve de réelles difficultés à repousser les moyens d'obturation escamotables à l'intérieur du bac et, ainsi, à s'abreuver. Ce problème est encore amplifié du fait de l'augmentation de la taille du mufle des animaux qui nécessite d'augmenter la taille (plus particulièrement la surface) de la trappe escamotable et, par conséquent, d'augmenter la force qu'un tel animal doit exercer sur la trappe escamotable pour accéder à l'eau et pour pouvoir s'abreuver, ceci avec les inconvénients mentionnés ci-dessus.

La présente invention se veut de remédier aux inconvénients des abreuvoirs de l'état de la technique.

Un autre objectif de la présente invention est de proposer un abreuvoir qui présente, à la fois, une grande ouverture traversante permettant à tous les animaux (en particulier aux animaux ayant un grand mufle) d'accéder à l'eau pour s'abreuver et des moyens d'obturation escamotables permettant de faciliter l'accès à l'eau pour ces animaux.

A cet effet, l'invention concerne un abreuvoir pour animaux, notamment pour bovins, comportant, d'une part, un bac, qui présente un volume interne configuré pour contenir de l'eau ainsi qu'une partie supérieure pourvue d'une ouverture, d'autre part, un châssis, qui est positionné par-dessus le bac, et qui présente une ouverture traversante qui est configurée pour permettre un accès au volume interne du bac et, d'autre part encore, des moyens d'obturation escamotables, qui sont configurés pour obturer l'ouverture traversante du châssis, qui sont mobiles entre une position de fermeture et une position d'ouverture de l'ouverture traversante du châssis, et qui comportent, d'une part, une trappe escamotable qui est configurée pour obturer l'ouverture traversante du châssis, ceci en position de fermeture de l'ouverture traversante du châssis, d'autre part, un flotteur, qui est positionné à l'intérieur du volume interne du bac, et qui est configuré pour être au moins en partie immergé dans l'eau contenue dans le volume interne du bac ainsi que pour repousser la trappe escamotable en position de fermeture de l'ouverture traversante du châssis, ceci sous l'effet de la poussée de l'eau et, d'autre part encore, des moyens d'entretoise qui sont configurés pour relier la trappe escamotable et le flotteur ainsi que pour espacer cette trappe escamotable et ce flotteur. Cet abreuvoir comporte, aussi, des moyens de montage en déplacement qui sont configurés pour monter les moyens d'obturation escamotables en déplacement par rapport au châssis, ceci entre la position de fermeture et la position d'ouverture de l'ouverture traversante du châssis. Cet abreuvoir est caractérisé par le fait qu'il comporte, encore, un couvercle, qui surmonte le bac, qui referme l'ouverture du bac, qui comporte le châssis, les moyens d'obturation escamotables et les moyens de montage en déplacement lesquels comportent des moyens de montage en rotation des moyens d'obturation escamotables par rapport au châssis, ceci autour d'un axe de rotation.

Une autre caractéristique concerne le fait que l'abreuvoir est configuré en sorte que, en position de fermeture de l'ouverture traversante du châssis, la trappe escamotable est positionnée à une distance déterminée au-dessus du niveau de l'eau, ceci en sorte de ménager, entre la trappe escamotable et le niveau de l'eau, un volume d'air isolant.

Encore une autre caractéristique concerne le fait que la trappe escamotable présente une face inférieure, d'une part, qui est orientée en direction du volume interne du bac ceci au moins en position de fermeture de l'ouverture traversante du châssis, d'autre part, à partir de laquelle les moyens d'entretoise s'étendent, et, d'autre part encore, qui présente une surface qui est, selon le cas, supérieure à la surface du flotteur qui est en contact avec l'eau et/ou parallèle à la surface de l'eau, ceci au moins en position de fermeture de l'ouverture traversante (12) du châssis (11).

Encore une autre caractéristique est relative au fait que le flotteur est configuré en sorte de permettre le passage des moyens d'obturation escamotables, d'une part, de la position d'ouverture de l'ouverture traversante du châssis à la position de fermeture de l'ouverture traversante du châssis, ceci sous l'effet de la poussée de l'eau et, d'autre part, de la position de fermeture de l'ouverture traversante du châssis à la position d'ouverture de l'ouverture traversante du châssis, ceci sous l'effet d'une pression exercée sur les moyens d'obturation escamotables par un animal, plus particulièrement par un mufle que comporte cet animal.

Selon une autre caractéristique, le couvercle comporte des moyens de positionnement qui sont configurés pour positionner le châssis et la trappe escamotable à une distance comprise entre 1mm et 10mm.

Ainsi, l'abreuvoir pour animaux selon l'invention comporte des moyens d'obturation escamotables qui comportent une trappe escamotable, un flotteur et des moyens d'entretoise. De tels moyens d'obturation escamotables permettent, avantageusement, de limiter la surface de ces moyens d'obturation escamotables en contact avec l'eau à la surface d'au moins une partie du flotteur. Ceci permet, avantageusement, de réduire la force à exercer par les animaux pour repousser ces moyens d'obturation escamotables à l'intérieur du bac et, ainsi, de faciliter l'accès à l'eau pour ces animaux et, donc, leur abreuvement. Ces caractéristiques permettent, alors, également, d'augmenter la taille de l'ouverture traversante ce qui permet, avantageusement, à tous les animaux (y compris ceux qui présentent un grand mufle) d'accéder à l'eau pour s'abreuver.

Une autre caractéristique concerne le fait que l'abreuvoir comporte des moyens de montage en déplacement qui comportent des moyens de montage en rotation des moyens d'obturation escamotables par rapport au châssis, ceci autour d'un axe de rotation. De tels moyens de montage en déplacement permettent, avantageusement et au moins lorsque l'animal commence à exercer une force sur la trappe escamotable, de faire en sorte que la surface de l'eau en contact avec la trappe escamotable soit particulièrement réduite par rapport à l'état de la technique ce qui permet de réduire de manière notable la poussée d'Archimède exercée sur cette trappe escamotable et ainsi de faciliter l'enfoncement de la trappe escamotable dans l'eau. Ceci permet de diminuer, de manière substantielle, la force qu'un animal doit exercer sur la trappe escamotable pour accéder à l'eau en vue de s'abreuver. Ces caractéristiques permettent, là encore, d'augmenter la taille de l'ouverture traversante et de la trappe escamotable ce qui permet, avantageusement, à tous les animaux (y compris ceux qui présentent un grand mufle) d'accéder aisément à l'eau pour s'abreuver.

De plus, l'abreuvoir est configuré en sorte que, en position de fermeture de l'ouverture traversante du châssis, la trappe escamotable est positionnée à une distance déterminée au-dessus du niveau de l'eau, ceci en sorte de ménager, entre la trappe escamotable et le niveau de l'eau, un volume d'air isolant ce qui permet, avantageusement, de retarder l'apparition de gel à l'intérieur du bac de l'abreuvoir. De plus, ces caractéristiques permettent d'éviter que la trappe escamotable (qui présente la plus grande surface des différents éléments constituant les moyens d'obturation escamotables) soit en contact avec la surface de l'eau ce qui, là encore, permet de réduire la surface des moyens d'obturation escamotables en contact avec l'eau et qui permet, là encore et avantageusement, de réduire la force à exercer par les animaux pour repousser ces moyens d'obturation escamotables à l'intérieur du bac.

Une caractéristique additionnelle concerne le fait que l'ouverture traversante et/ou la trappe escamotable présente une forme non circulaire, plus particulièrement la forme d'une ellipse, une forme oblongue, une forme ovale, une forme carrée aux coins arrondis ou une forme rectangulaire aux coins arrondis. Une telle caractéristique permet, avantageusement, de proposer un abreuvoir dont la taille de l'ouverture traversante est notablement supérieure à la taille de l'ouverture traversante (notamment ronde) des abreuvoirs de l'état de la technique ce qui permet à tous les animaux (y compris ceux qui ont un grand mufle) d'accéder facilement et confortablement à l'eau contenue dans le bac.

Selon une caractéristique additionnelle, le couvercle comporte des moyens de montage en déplacement des moyens d'obturation escamotables par rapport au châssis. De tels moyens de montage en déplacement permettent, avantageusement et en particulier lorsque l'ouverture traversante et/ou la trappe présente une forme non circulaire (plus particulièrement la forme d'une ellipse, une forme oblongue, une forme ovale, une forme carrée avec des coins arrondis ou une forme rectangulaire avec des coins arrondis), d'autoriser un déplacement des moyens d'obturation escamotables uniquement entre les positions d'ouverture et de fermeture de l'ouverture traversante et, ainsi, d'éviter un positionnement inapproprié de la trappe escamotable par rapport à l'ouverture traversante qui, en l'absence de tels moyens de montage en déplacement, pourrait conduire les moyens d'obturations escamotables à se mettre de travers et/ou à passer à travers l'ouverture traversante et à s'échapper de l'abreuvoir.

Le couvercle de l'abreuvoir comporte des moyens de positionnement qui sont configurés pour positionner le châssis et la trappe escamotable à une distance comprise entre 1mm et 10mm. Ces caractéristiques permettent, avantageusement, l'écoulement de l'eau entre le châssis et la trappe escamotable vers l'intérieur du bac et empêchent, ainsi, une stagnation de cette eau entre ce châssis et cette trappe escamotable qui, par de températures négatives, gèle et empêche, alors, le déplacement des moyens d'obturation escamotables et, ainsi, l'accès à l'eau.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
[Fig 1] est une vue schématisée et en perspective d'un abreuvoir conforme à la présente invention.
[Fig 2] est une vue schématisée et en coupe selon un plan médian vertical de l'abreuvoir illustré figure 1, ceci en position de fermeture de l'ouverture traversante par les moyens d'obturation escamotables.
[Fig 3] est une vue similaire à la figure 2 et représente l'abreuvoir en position d'ouverture de l'ouverture traversante par les moyens d'obturation escamotables.
[Fig 4] est une vue schématisée, partielle, hybride et en coupe selon un plan parallèle au plan médian vertical et représente l'abreuvoir qui est conforme à l'invention et dans lequel les moyens d'obturation escamotables adoptent une position d'ouverture et de fermeture de l'ouverture traversante.

En référence notamment aux figures susmentionnées, la présente invention concerne le domaine de la fabrication du matériel pour l'élevage d'animaux, notamment des bovins. Cette invention concerne, plus particulièrement, le domaine de la fabrication du matériel pour l'abreuvement de tels animaux, en particulier le domaine de la fabrication d'abreuvoirs.

L'invention concerne, alors, un abreuvoir 1 pour animaux, notamment pour des bovins.

Un tel abreuvoir 1 comporte un bac 2 qui présente un fond 3 ainsi que des parois latérales 4 qui s'étendent à partir de ce fond 3.

Un tel bac 2 présente, également, une partie supérieure 5 qui est pourvue d'une ouverture 6, notamment délimitée par les parois latérales 4.

Un tel bac 2 présente, encore, un volume interne 7, d'une part, qui est délimité par le fond 3, les parois latérales 4 et l'ouverture 6 et, d'autre part, qui est configuré pour contenir de l'eau.

De manière additionnelle, un tel bac 2 peut, encore, comporter des moyens d'alimentation en eau 8. De tels moyens d'alimentation en eau 8 peuvent être configurés pour gérer le niveau d'eau N (plus particulièrement le niveau maximal d'eau) à l'intérieur du bac 2.

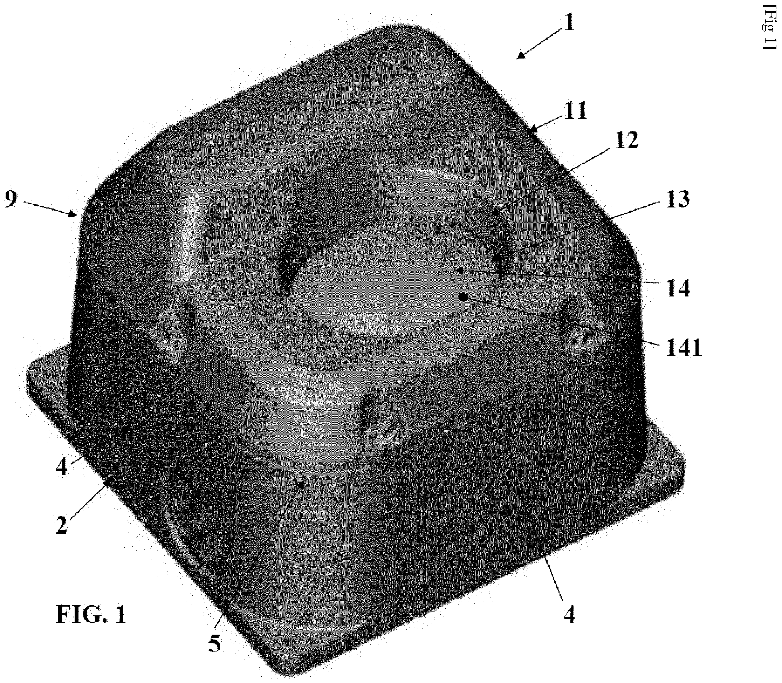

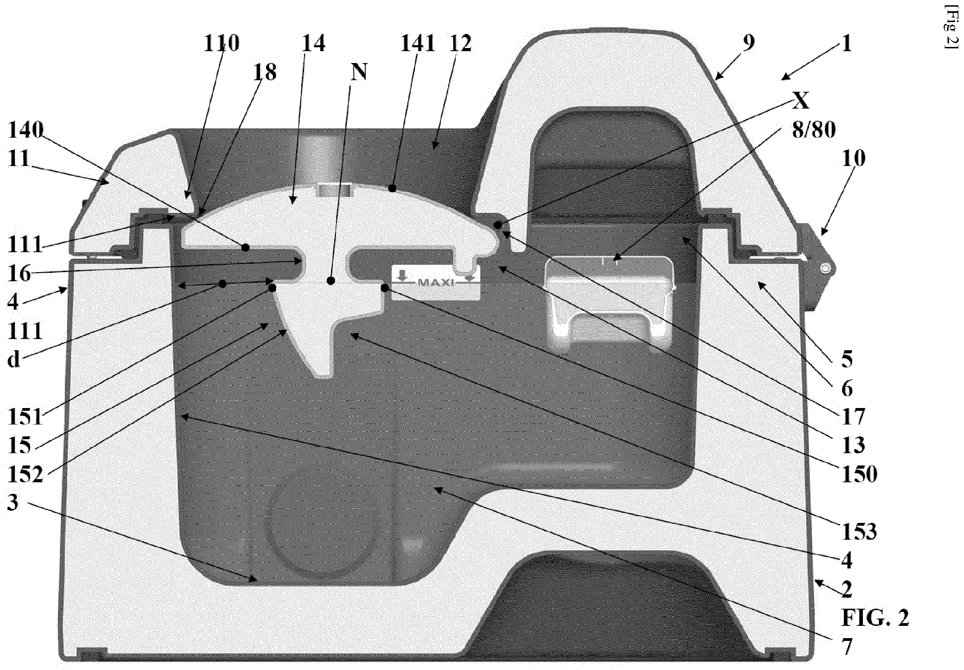

Ledit abreuvoir 1 comporte, également, un couvercle 9, qui surmonte le bac 2 (plus particulièrement qui est positionné par-dessus le bac 2), et qui referme l'ouverture 6 de ce bac 2. Ce couvercle 9 est mobile (voire amovible) par rapport au bac 2 et peut être raccordé au bac 2 par l'intermédiaire de moyens d'articulation 10 qui autorisent un déplacement de ce couvercle 9 entre une position d'ouverture (non représentée) et une position de fermeture de l'ouverture 6 du bac 2 (figures 1 à 4). Ce couvercle 9 peut être fixé sur le bac 2, ceci par l'intermédiaire de moyens de fixation réversibles.

Ce couvercle 9 comporte un châssis 11, qui est positionné par-dessus le bac 2 (plus particulièrement par-dessus les parois latérales 4 que comporte ce bac 2), et qui présente une ouverture traversante 12 qui est configurée pour permettre un accès au volume interne 7 du bac 2 et, donc, à l'eau contenue dans le volume interne 7 de ce bac 2.

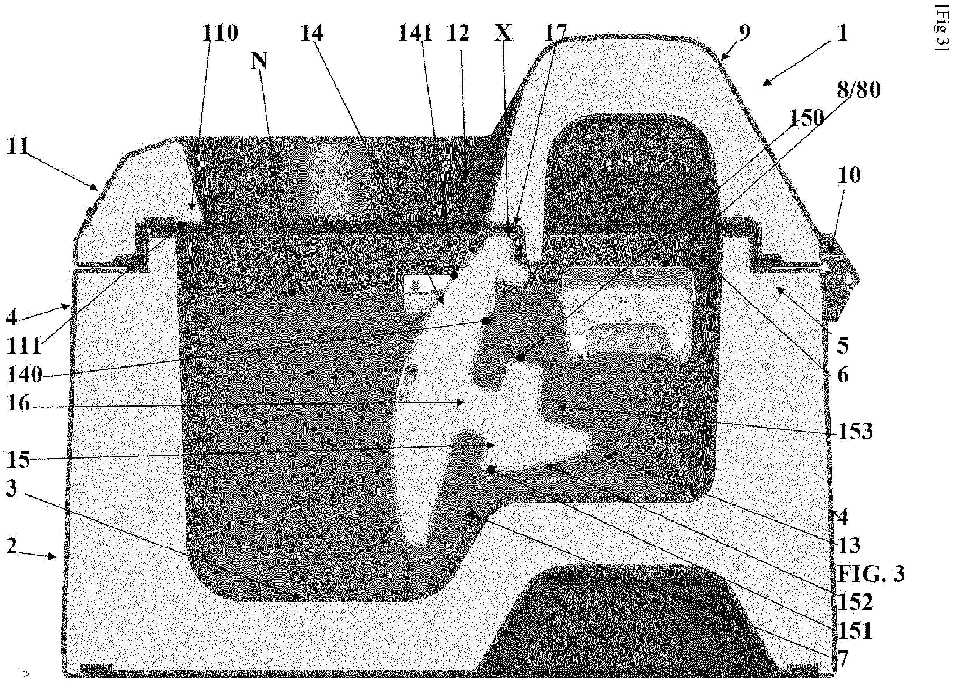

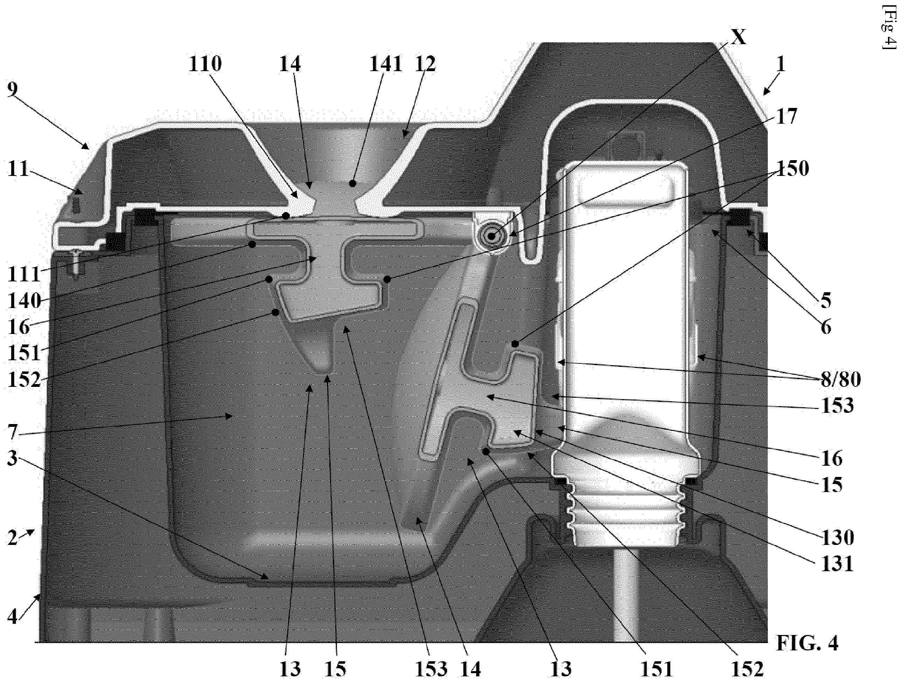

Ce couvercle 9 comporte, encore, des moyens d'obturation escamotables 13, qui sont configurés pour obturer l'ouverture traversante 12 du châssis 11, et qui sont mobiles entre une position de fermeture (figures 1, 2 et 4) et une position d'ouverture (figures 3 et 4) de l'ouverture traversante 12 du châssis 11.

Selon l'invention, ces moyens d'obturation escamotables 13 comportent une trappe escamotable 14 qui est configurée, d'une part, pour obturer l'ouverture traversante 12 du châssis 11, ceci en position de fermeture de l'ouverture traversante 12 du châssis 11 (figures 1, 2 et 4), d'autre part, pour que l'ouverture traversante 12 du châssis 11 soit ouverte, ceci en position d'ouverture de l'ouverture traversante 12 du châssis 11 (figures 3 et 4).

Ces moyens d'obturation escamotables 13 comportent un flotteur 15, qui est positionné à l'intérieur du volume interne 7 du bac 2, et qui est configuré pour être au moins en partie immergé dans l'eau contenue dans le volume interne 7 du bac 2 ainsi que pour repousser la trappe escamotable 14 en position de fermeture de l'ouverture traversante 12 du châssis 11, ceci sous l'effet de la poussée de l'eau, plus particulièrement sous l'effet de la poussée d'Archimède.

Ces moyens d'obturation escamotables 13 comportent, également, des moyens d'entretoise 16 qui sont configurés pour relier la trappe escamotable 14 et le flotteur 15 ainsi que pour espacer cette trappe escamotable 14 et ce flotteur 15.

Selon une autre caractéristique, l'abreuvoir 1 est configuré en sorte que, en position de fermeture de l'ouverture traversante 12 du châssis 11, la trappe escamotable 14 (plus particulièrement une face inférieure 140 que comporte cette trappe escamotable 14) est positionnée à une distance déterminée au-dessus du niveau de l'eau N (plus particulièrement au-dessus du niveau maximum de l'eau), ceci en sorte de ménager, entre la trappe escamotable 14 et le niveau de l'eau N, un volume d'air isolant.

A ce propos, on observera que c'est, plus particulièrement, au moins une partie des moyens d'obturation escamotables 13 (notamment le flotteur 15, voire encore la trappe escamotable 14 et/ou les moyens d'entretoise 16), que comporte l'abreuvoir 1, et qui est configurée en sorte que, en position de fermeture de l'ouverture traversante 12 du châssis 11, la trappe escamotable 14 (plus particulièrement la face inférieure 140 de cette trappe escamotable 14) est positionnée à une distance déterminée au-dessus du niveau de l'eau N.

De manière additionnelle, les moyens d'alimentation en eau 8 (qui peuvent être configurés pour gérer le niveau d'eau N dans le bac 2) peuvent, également, être configurés en sorte que, en position de fermeture de l'ouverture traversante 12 du châssis 11, la trappe escamotable 14 (plus particulièrement la face inférieure 140 de cette trappe escamotable 14) est positionnée à une distance déterminée au-dessus du niveau de l'eau N.

A ce propos, on observera que la distance déterminée est comprise entre 10mm et 40mm, de préférence de l'ordre de 30mm.

Tel que mentionné ci-dessus, la trappe escamotable 14 présente une face inférieure 140, d'une part, qui est orientée en direction du volume interne 7 du bac 2 et/ou en direction du fond 3 de ce bac 2, ceci au moins en position de fermeture de l'ouverture traversante 12 du châssis 11 et, d'autre part, à partir de laquelle les moyens d'entretoise 16 s'étendent.

Cette trappe escamotable 14 présente, également, une face supérieure 141, qui est orientée en direction de l'ouverture traversante 12 du châssis 11, et qui est configurée pour coopérer avec (plus particulièrement pour venir en appui contre) un rebord inférieur 111 d'une bordure 110, que comporte le châssis 11, et qui borde l'ouverture traversante 12 de ce châssis 11, ceci en position de fermeture de cette ouverture traversante 12.

Selon une autre caractéristique, la section de la trappe escamotable 14 présente la forme d'une lentille ce qui signifie qu'au moins l'une des faces (inférieure 140 et/ou supérieure 141) de cette trappe escamotable 14 est courbée.

Tel que visible sur les figures en annexe, la face supérieure 141 de la trappe escamotable 14 est courbée et présente une surface convexe. Une telle caractéristique permet, avantageusement, d'éviter une stagnation de l'eau sur cette trappe escamotable 14 ainsi qu'un écoulement de l'eau en direction du volume interne 7 du bac 2.

En ce qui concerne la face inférieure 140 de la trappe escamotable 14, celle-ci 140 présente une surface qui est parallèle à la surface de l'eau, ceci au moins en position de fermeture de l'ouverture traversante 12 du châssis 11.

De manière alternative ou (et de préférence) additionnelle, la face inférieure 140 de la trappe escamotable 14 présente une surface qui est supérieure à la surface du flotteur 15 qui est en contact avec l'eau.

Compte tenu du fait que cette face inférieure 140 de la trappe escamotable 14 est positionnée à une distance déterminée au-dessus du niveau de l'eau N (donc n'est pas en contact avec l'eau), cette caractéristique permet de limiter la surface des moyens d'obturation escamotables 13 en contact avec l'eau à la surface d'au moins une partie du flotteur 15. Ceci permet, avantageusement, de réduire la surface des moyens d'obturation escamotables 13 en contact avec l'eau et, donc, la force à exercer par les animaux pour repousser ces moyens d'obturation escamotables 13 à l'intérieur du bac 2 et, ainsi, de faciliter l'accès à l'eau pour ces animaux et, donc, leur abreuvement.

Selon une caractéristique alternative ou (et de préférence) additionnelle, le flotteur 15 (plus particulièrement la partie immergée de ce flotteur 15) est configuré en sorte de permettre le passage des moyens d'obturation escamotables 13, d'une part, de la position d'ouverture de l'ouverture traversante 12 du châssis 11 à la position de fermeture de l'ouverture traversante 12 du châssis 11, ceci sous l'effet de la poussée de l'eau (plus particulièrement de la poussée d'Archimède) et, d'autre part, de la position de fermeture de l'ouverture traversante 12 du châssis 11 à la position d'ouverture de l'ouverture traversante 12 du châssis 11, ceci sous l'effet d'une pression exercée sur les moyens d'obturation escamotables 13 par un animal, plus particulièrement par un mufle que comporte cet animal.

Une autre caractéristique concerne le fait que l'ouverture traversante 12 et/ou la trappe escamotable 14 présente une forme non circulaire, plus particulièrement la forme d'une ellipse, une forme oblongue, une forme ovale, une forme carrée aux coins arrondis ou une forme rectangulaire aux coins arrondis.

Selon un mode de réalisation préféré, l'ouverture traversante 12 ainsi que la trappe escamotable 14 présentent une telle forme non circulaire.

Une caractéristique additionnelle concerne le fait que le couvercle 9 comporte des moyens de montage en déplacement 17 qui sont configurés pour monter les moyens d'obturation escamotables 13 (plus particulièrement la trappe escamotable 14 que comportent ces moyens d'obturation escamotable 13) en déplacement par rapport au châssis 11 (plus particulièrement sur le châssis 11), ceci entre la position de fermeture et la position d'ouverture de l'ouverture traversante 12 du châssis 11.
Selon un premier mode de réalisation non représenté, les moyens de montage en déplacement 17 comportent des moyens de guidage qui sont configurés pour guider les moyens d'obturation escamotables 13, ceci entre la position de fermeture et la position d'ouverture de l'ouverture traversante 12 du châssis 11.
De tels moyens de guidage peuvent être configurés pour guider les moyens d'obturation escamotables 13 en translation, plus particulièrement en translation rectiligne ou curviligne.

Selon un deuxième mode de réalisation illustré sur les figures en annexe, les moyens de montage en déplacement 17 comportent des moyens de montage en rotation des moyens d'obturation escamotables 13 par rapport au châssis 11 (plus particulièrement sur le châssis 11), ceci autour d'un axe de rotation X.

De tels moyens de montage en rotation peuvent comporter au moins une articulation et/ou au moins une charnière.

Selon une autre caractéristique, ledit axe de rotation X est horizontal.

En ce qui concerne le flotteur 15, celui-ci adopte la forme d'un bloc.

Ce flotteur 15 présente, d'une part, une extrémité proximale 150 qui est orientée en direction des moyens de montage en déplacement 17 et, d'autre part, une extrémité distale 151 qui est orientée dans une direction opposée à ces moyens de montage en déplacement 17.

De manière additionnelle, l'extrémité distale 151 comporte une face 152 qui présente une forme convexe dont la courbure est orientée dans une direction opposée aux moyens de montage en déplacement 17. Ces caractéristiques permettent, avantageusement, un déplacement libre du flotteur 15 par rapport au fond 3 du bac 2, plus particulièrement sans que ce fond 3 entrave le déplacement de ce flotteur 15.

De manière alternative ou (et de préférence) additionnelle, l'extrémité distale 151 du flotteur 15 est positionnée à une distance d de l'une des parois latérales 4 du bac 2 qui est comprise entre 60mm et 100mm, de préférence de l'ordre de 80mm. A ce propos, on observera que, en cas de gel, la glace se forme tout d'abord au niveau de la paroi latérale 4 du bac 2 et progresse en direction du flotteur 15. Le positionnement de l'extrémité distale 151 du flotteur 15 à une telle distance de la paroi latérale 4 du bac 2 permet, avantageusement, de retarder de manière substantielle l'apparition de glace au niveau du flotteur 15 et permet, ainsi, de retarder de manière substantielle le blocage des moyens d'obturation escamotables 13 par la glace.

De manière alternative ou (et de préférence) additionnelle, les moyens d'entretoise 16 sont en retrait au moins par rapport à l'extrémité distale 151 du flotteur 15, voire encore par rapport à l'extrémité proximale 150 du flotteur 15. Ces caractéristiques permettent, avantageusement, d'augmenter la longueur de la lame d'air isolante, d'une part, entre la trappe escamotable 14 et le flotteur 15 et, d'autre part, entre au moins l'une des parois latérales 3 du bac 2 et les moyens d'entretoise 16 ce qui permet, avantageusement, de retarder encore davantage l'apparition de gel à l'intérieur du bac 2 de l'abreuvoir 1.

Une autre caractéristique concerne le fait que le flotteur 15 présente une épaisseur croissante à partir de l'extrémité proximale 150 et en direction de l'extrémité distale 151.

En ce qui concerne les moyens d'entretoise 16, ceux-ci adoptent la forme d'une lame qui s'étend selon un plan qui est perpendiculaire à un plan selon lequel la trappe escamotable 14 s'étend, plus particulièrement selon lequel la face inférieure 140 que comporte cette trappe escamotable 14 s'étend.

De manière alternative ou (et de préférence) additionnelle, ces moyens d'entretoise 16 présentent une largeur qui est inférieure à la largeur de la trappe escamotable 14 ainsi qu'à la largeur du flotteur 15. Là encore, cette caractéristique permet, avantageusement, d'augmenter la longueur de la lame d'air isolante, ceci avec les résultats mentionnés ci-dessus.

De manière additionnelle, le flotteur 15 présente une largeur qui est inférieure à la largeur de la trappe escamotable 14. Ces caractéristiques permettent, là encore, de retarder de manière substantielle l'apparition de glace au niveau du flotteur 15 et permet, ainsi, de retarder de manière substantielle le blocage des moyens d'obturation escamotables 13 par la glace.

A ce propos, on observera que ladite largeur est considérée selon une direction parallèle à un plan selon lequel la trappe escamotable 14 s'étend.

Encore une autre caractéristique concerne le fait que le flotteur 15 et/ou les moyens d'entretoise 16 (plus particulièrement la lame des moyens d'entretoise 16) présentent une forme allongée et s'étendent selon une direction parallèle à l'axe de rotation X des moyens de montage en déplacement 17.

De manière alternative ou (et de préférence) additionnelle, au moins une partie du flotteur 15 (plus particulièrement au moins une partie du bloc que comporte ce flotteur 15) et/ou les moyens d'entretoise 16 (plus particulièrement la lame des moyens d'entretoise 16) s'étendent sur au moins une partie (voire, et de préférence, sur l'intégralité) de la longueur de la trappe escamotable 14, ceci selon une direction parallèle à l'axe de rotation X des moyens de montage en déplacement 17. Ces caractéristiques permettent, en particulier, d'augmenter le volume immergé du flotteur 15 et, ainsi, la poussée de l'eau exercée sur ce flotteur 15.

Une autre caractéristique concerne le fait qu'au moins le flotteur 15 présente au moins un logement 153, au moins un décrochement ou au moins une échancrure à l'intérieur duquel/de laquelle au moins une partie des moyens d'alimentation en eau 8 (plus particulièrement un flotteur 80 que comporte ces moyens d'alimentation en eau 8) est logée, ceci en position d'ouverture de l'ouverture traversante 12 du châssis 11. Ces caractéristiques permettent, avantageusement, d'empêcher que les moyens d'alimentation en eau 8 entravent la rotation des moyens d'obturation escamotables 13 entre la position de fermeture et la position d'ouverture de l'ouverture traversante 12 et, ainsi, permettent d'augmenter l'amplitude de cette rotation ce qui permet de faciliter l'accès à l'eau contenu dans l'abreuvoir 1.

Encore une autre caractéristique concerne le fait que le couvercle 9 comporte, encore, des moyens de positionnement 18 qui sont configurés pour positionner le châssis 11 (plus particulièrement le rebord inférieur 111 de la bordure 110 du châssis 11) et la trappe escamotable 14 (plus particulièrement la face supérieure 141 et/ou une bordure que présente cette trappe escamotable 14, plus particulièrement que présente la face supérieure 141 de cette trappe escamotable 14) à une distance comprise entre 1mm et 10mm, de préférence comprise entre 1,5mm et 5mm, ceci en position de fermeture de l'ouverture traversante 12 par les moyens d'obturation escamotables 13.

De tels moyens de positionnement 18 peuvent adopter la forme d'au moins une protubérance ou d'au moins un ergot que comporte, selon le cas, le châssis 11 (plus particulièrement le rebord inférieur 111 de la bordure 110 du châssis 11) et/ou la trappe escamotable 14 (plus particulièrement la face supérieure 141 et/ou la bordure de cette trappe escamotable 14).

De tels moyens de positionnement 18 peuvent s'étendre de manière radiale par rapport à l'ouverture traversante 12 et/ou par rapport à la trappe escamotable 14.

Encore une autre caractéristique concerne le fait que le bac 2 et/ou le couvercle 9 (plus particulièrement le châssis 11 et/ou les moyens d'obturation escamotables 13) est réalisé au moins en partie en un matériau isolant thermique.

De manière alternative ou (et de préférence) additionnelle, au moins une partie des moyens d'obturation escamotables 13 (plus particulièrement la trappe escamotable 14, le flotteur 15 et les moyens d'entretoise 16) comporte, d'une part, une enveloppe 130 (plus particulièrement réalisée en un matériau polymère et/ou synthétique, notamment en polyéthylène) et, d'autre part, un volume interne 131, qui est délimité par ladite enveloppe 130, et qui peut, selon le cas, être vide ou être rempli, au moins en partie, par un matériau isolant thermique, plus particulièrement par une mousse et/ou par un matériau polymère et/ou synthétique, par exemple de la mousse de polyuréthane.

Ces moyens d'obturation escamotables 13 (qui comportent, la trappe escamotable 14, le flotteur 15 et les moyens d'entretoise 16) peuvent être constitués par une pièce unique, notamment réalisée par moulage, plus particulièrement par rotomoulage.

## Revendications

1. Abreuvoir (1) pour animaux, notamment pour des bovins, comportant, d'une part, un bac (2), qui présente un volume interne (7) configuré pour contenir de l'eau ainsi qu'une partie supérieure (5) pourvue d'une ouverture (6), d'autre part, un châssis (11), qui est positionné par-dessus le bac (2), et qui présente une ouverture traversante (12) qui est configurée pour permettre un accès au volume interne (7) du bac (2) et, d'autre part encore, des moyens d'obturation escamotables (13), qui sont configurés pour obturer l'ouverture traversante (12) du châssis (11), qui sont mobiles entre une position de fermeture et une position d'ouverture de l'ouverture traversante (12) du châssis (11), et qui comportent, d'une part, une trappe escamotable (14) qui est configurée pour obturer l'ouverture traversante (12) du châssis (11), ceci en position de fermeture de l'ouverture traversante (12) du châssis (11), d'autre part, un flotteur (15), qui est positionné à l'intérieur du volume interne (7) du bac (2), et qui est configuré pour être au moins en partie immergé dans l'eau contenue dans le volume interne (7) du bac (2) ainsi que pour repousser la trappe escamotable (14) en position de fermeture de l'ouverture traversante (12) du châssis (11), ceci sous l'effet de la poussée de l'eau et, d'autre part encore, des moyens d'entretoise (16) qui sont configurés pour relier la trappe escamotable (14) et le flotteur (15) ainsi que pour espacer cette trappe escamotable (14) et ce flotteur (15), cet abreuvoir (1) comporte, aussi, des moyens de montage en déplacement (17) qui sont configurés pour monter les moyens d'obturation escamotables (13) en déplacement par rapport au châssis (11), ceci entre la position de fermeture et la position d'ouverture de l'ouverture traversante (12) du châssis (11), **caractérisé par le fait que** l'abreuvoir (1) comporte, encore, un couvercle (9), qui surmonte le bac (2), qui referme l'ouverture (6) du bac (2), qui comporte le châssis (11), les moyens d'obturation escamotables (13) et les moyens de montage en déplacement (17) lesquels comportent des moyens de montage en rotation des moyens d'obturation escamotables (13) par rapport au châssis (11), ceci autour d'un axe de rotation (X).

2. Abreuvoir (1) selon la revendication 1, **caractérisé par le fait qu'**il est configuré en sorte que, en position de fermeture de l'ouverture traversante (12) du châssis (11), la trappe escamotable (14) est positionnée à une distance déterminée au-dessus du niveau de l'eau (N), ceci en sorte de ménager, entre la trappe escamotable (14) et le niveau de l'eau (N), un volume d'air isolant.

3. Abreuvoir (1) selon l'une quelconque des revendications précédentes, **caractérisé par le fait que** la trappe escamotable (14) présente une face inférieure (140), d'une part, qui est orientée en direction du volume interne (7) du bac (2) ceci au moins en position de fermeture de l'ouverture traversante (12) du châssis (11), d'autre part, à partir de laquelle les moyens d'entretoise (16) s'étendent, et, d'autre part encore, qui présente une surface qui est parallèle à la surface de l'eau, ceci au moins en position de fermeture de l'ouverture traversante (12) du châssis (11).

4. Abreuvoir (1) selon l'une quelconque des revendications 1 ou 2, **caractérisé par le fait que** la trappe escamotable (14) présente une face inférieure (140), d'une part, qui est orientée en direction du volume interne (7) du bac (2) ceci au moins en position de fermeture de l'ouverture traversante (12) du châssis (11), d'autre part, à partir de laquelle les moyens d'entretoise (16) s'étendent, et, d'autre part encore, qui présente une surface qui est supérieure à la surface du flotteur (15) qui est en contact avec l'eau.

5. Abreuvoir (1) selon l'une quelconque des revendications précédentes, **caractérisé par le fait que** le flotteur (15) est configuré en sorte de permettre le passage des moyens d'obturation escamotables (13), d'une part, de la position d'ouverture de l'ouverture traversante (12) du châssis (11) à la position de fermeture de l'ouverture traversante (12) du châssis (11), ceci sous l'effet de la poussée de l'eau et, d'autre part, de la position de fermeture de l'ouverture traversante (12) du châssis (11) à la position d'ouverture de l'ouverture traversante (12) du châssis (11), ceci sous l'effet d'une pression exercée sur les moyens d'obturation escamotables (13) par un animal, plus particulièrement par un mufle que comporte cet animal.

6. Abreuvoir (1) selon l'une quelconque des revendications précédentes, **caractérisé par le fait que** le flotteur (15) présente, d'une part, une extrémité proximale (150) qui est orientée en direction des moyens de montage en déplacement (17), d'autre part, une extrémité distale (151), qui est orientée dans une direction opposée aux moyens de montage en déplacement (17), et qui est positionnée à une distance (d) de l'une des parois latérales (4) du bac (2) qui est comprise entre 60mm et 100mm, de préférence de l'ordre de 80mm.

7. Abreuvoir (1) selon l'une quelconque des revendications précédentes, **caractérisé par le fait que** le flotteur (15) présente, d'une part, une extrémité proximale (150) qui est orientée en direction des moyens de montage en déplacement (17), d'autre part, une extrémité distale (151) qui est orientée dans une direction opposée aux moyens de montage en déplacement (17) tandis que les moyens d'entretoise (16) sont en retrait au moins par rapport à l'extrémité distale (151) du flotteur (15), voire encore par rapport à l'extrémité proximale (150) du flotteur (15).

8. Abreuvoir (1) selon l'une quelconque des revendications précédentes, **caractérisé par le fait que** les moyens d'entretoise (16) présentent une largeur qui est inférieure à la largeur de la trappe escamotable (14) ainsi qu'à la largeur du flotteur (15).

9. Abreuvoir (1) selon l'une quelconque des revendications précédentes, **caractérisé par le fait qu'**au moins une partie des moyens d'obturation escamotables (13) comporte, d'une part, une enveloppe (130) et, d'autre part, un volume interne (131), qui est délimité par ladite enveloppe (130), et qui peut, selon le cas, être vide ou être rempli, au moins en partie, par un matériau isolant thermique.

10. Abreuvoir selon l'une quelconque des revendications précédentes, **caractérisé par le fait que** l'ouverture traversante (12) et/ou la trappe escamotable (14) présente une forme non circulaire, plus particulièrement la forme d'une ellipse, une forme oblongue, une forme ovale, une forme carrée aux coins arrondis ou une forme rectangulaire aux coins arrondis
